# FASCICULE DE BREVET EUROPEEN

(11) **EP 2 307 491 B1**
(45) Date de publication et mention de la délivrance du brevet: **06.09.2017**
(21) Numéro de dépôt: 09800011.0
(22) Date de dépôt: 20.07.2009
(51) Int. Cl.: C08L 7/00, C08L 9/00, C08L 9/06, B60C 1/00, C08K 3/30

(54) **COMPOSITION DE CAOUTCHOUC POUR BANDE DE ROULEMENT DE PNEUMATIQUE HIVER**
KAUTSCHUKZUSAMMENSETZUNG FÜR WINTERREIFEN-LAUFFLÄCHE
RUBBER COMPOSITION FOR A WINTER TYRE TREAD

(30) Priorité: 24.07.2008 FR 0855038
(43) Date de publication de la demande: 13.04.2011
(73) Titulaire: Compagnie Générale des Etablissements Michelin, 63000 Clermont-Ferrand (FR)
(72) Inventeur: MAESAKA, Masayuki, Ota, Gunma 373-8668 (JP); PAGANO, Salvatore, Tokyo 102-8176 (JP); WATANABE, Makiko, Tokyo 102-8176 (JP)
(74) Mandataire: Ribière, Joel
(86) Numéro de dépôt international: PCT/EP2009/005243
(87) Numéro de publication internationale: WO 2010/009850

(56) Documents cités:
- EP-A- 1 829 934
- US-A- 2 739 135
- US-A- 3 423 265
- US-A- 4 840 988

## Description

L'invention est relative aux compositions caoutchouteuses utilisables notamment comme bandes de roulement de « pneumatiques hiver » aptes à rouler sur des sols recouverts de glace ou verglas sans être pourvus de clous (aussi appelés pneumatiques *"studless"*)*.*

Elle est plus particulièrement relative aux bandes de roulement de pneumatiques hiver spécifiquement adaptées à un roulage sous des conditions dites de "glace fondante" rencontrées dans un domaine de températures typiquement comprises entre -5°C et 0°C. On rappelle en effet que, dans un tel domaine, la pression des pneumatiques au passage d'un véhicule provoque une fusion superficielle de la glace qui se recouvre d'un mince film d'eau nuisible à l'adhérence de ces pneumatiques.

Pour éviter les effets néfastes des clous, notamment leur forte action abrasive sur le revêtement du sol lui-même et un comportement routier notablement dégradé sur sol sec, les manufacturiers de pneumatiques ont proposé différentes solutions consistant à modifier la formulation des compositions de caoutchouc elles-mêmes.

Ainsi, il a été proposé tout d'abord d'incorporer des particules solides à grande dureté, telle que par exemple du carbure de silicium (voir par exemple US 3 878 147), dont certaines viennent affleurer la surface de la bande de roulement au fur et à mesure de l'usure de cette dernière, et entrent donc en contact avec la glace. De telles particules, aptes à agir en définitive comme des micro-clous sur de la glace dure, grâce à un effet de "griffe" bien connu, restent relativement agressives vis-à-vis du sol ; elles ne sont pas bien adaptées aux conditions de roulage sur une glace fondante.

D'autres solutions ont donc été proposées, consistant notamment à incorporer des poudres hydrosolubles dans la composition constitutive de la bande de roulement. De telles poudres se solubilisent plus ou moins au contact de la neige ou de la glace fondue, ce qui permet d'une part la création à la surface de la bande de roulement de pneumatique de porosités susceptibles d'améliorer l'accrochage de la bande de roulement sur le sol et d'autre part la création de gorges jouant le rôle de canaux d'évacuation du film liquide créé entre le pneumatique et le sol. A titre d'exemples de telles poudres hydrosolubles, on peut citer par exemple l'emploi de poudre de cellulose, d'alcool vinylique ou d'amidon (voir par exemple demandes de brevet JP 3-159803, JP 2002-211203).

Dans tous ces exemples, la solubilité à très basse température et dans un temps très court de la poudre utilisée est un facteur essentiel au bon fonctionnement de la bande de roulement. Si la poudre n'est pas soluble dans les conditions d'utilisation du pneumatique, les fonctions précitées (création de microporosités et de canaux d'évacuation de l'eau) ne sont pas remplies et l'adhérence n'est pas améliorée. Un autre inconvénient connu de ces solutions est qu'elles peuvent pénaliser fortement le renforcement des compositions de caoutchouc (et donc leur résistance à l'usure) ou leur hystérèse (et donc leur résistance au roulement).

Poursuivant leurs recherches, les Demanderesses ont découvert une composition de caoutchouc nouvelle, apte a générer une microrugosité de surface efficace grâce à des microparticules hydrosolubles spécifiques, et qui permet d'améliorer l'adhérence sur glace des bandes de roulement et des pneumatiques les comportant, sous conditions de glace fondante, sans pénaliser les propriétés de renforcement et d'hystérèse.

Ainsi, un premier objet de l'invention concerne une composition de caoutchouc utilisable comme bande de roulement d'un pneumatique hiver, comportant au moins un élastomère diénique, plus de 30 pce d'un plastifiant liquide, entre 50 et 150 pce d'une charge renforçante, ladite composition étant caractérisée en ce qu'elle comprend en outre entre 5 et 40 pce de microparticules de sulfate de magnésium.

Dans un premier temps, ces microparticules de sulfate de magnésium, protubérantes à la surface de la bande de roulement, remplissent la fonction de griffe précédemment décrite sans l'inconvénient d'être abrasives. Puis, dans un second temps, après expulsion progressive de la matrice caoutchouteuse, elles libèrent des microcavités qui jouent le rôle de volume de stockage et de canal d'évacuation du film d'eau à la surface de la glace ; dans ces conditions, le contact entre la surface de la bande de roulement et la glace n'est plus lubrifié et le coefficient de friction est ainsi amélioré.

L'invention a également pour objet l'utilisation d'une telle composition de caoutchouc pour la fabrication de bandes de roulement de pneumatiques hiver, que ces dernières soient destinées à des pneumatiques neufs comme au rechapage de pneumatiques usagés.

L'invention a également pour objet ces bandes de roulement et ces pneumatiques eux-mêmes lorsqu'ils comportent une composition de caoutchouc conforme à l'invention.

Les pneumatiques de l'invention sont particulièrement destinés à équiper des véhicules à moteur de type tourisme, incluant les véhicules 4x4 (à quatre roues motrices) et véhicules SUV (*"Sport Utility Vehicles"*), des véhicules deux roues (notamment motos) comme des véhicules industriels choisis en particulier parmi camionnettes et "poids-lourd" (i.e., métro, bus, engins de transport routier (camions, tracteurs, remorques), véhicules hors-la-route tels qu'engins agricoles ou de génie civil.

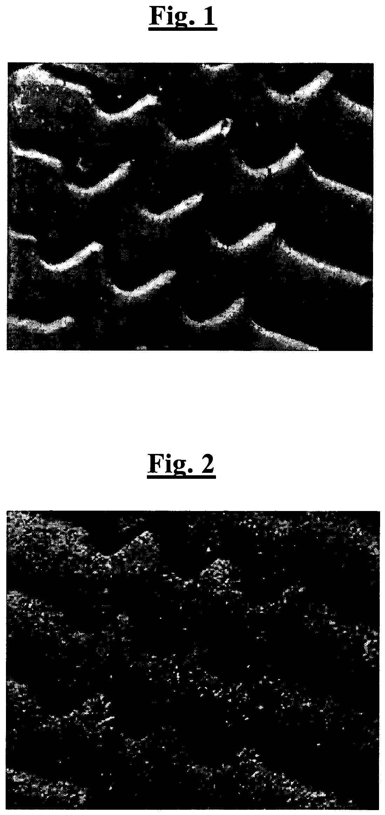

L'invention ainsi que ses avantages seront aisément compris à la lumière de la description et des exemples de réalisation qui suivent, ainsi que des figures 1 et 2 annexées qui reproduisent un cliché pris au microscopie optique (sous grossissement 50) réalisé à la surface d'une bande de roulement d'un pneumatique témoin (Fig. 1) et à la surface d'une bande de roulement d'un pneumatique conforme à l'invention (Fig. 2), les deux pneumatiques neufs ayant subi auparavant un premier roulage de 2 000 km, pour rodage et début d'usure.

### I. MESURES ET TESTS UTILISES

Les bandes de roulement et compositions de caoutchouc constitutives de ces bandes de roulement sont caractérisées, avant et après cuisson, comme indiqué ci-après.

### I-1. Plasticité Mooney

On utilise un consistomètre oscillant tel que décrit dans la norme française NF T 43-005 (Novembre 1980). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM = 0,83 Newton.mètre).

### I-2. Temps de grillage

Les mesures sont effectuées à 130°C, conformément à la norme française NF T 43-005. L'évolution de l'indice consistométrique en fonction du temps permet de déterminer le temps de grillage des compositions de caoutchouc, apprécié conformément à la norme précitée par le paramètre T5 (cas d'une grand rotor), exprimé en minutes, et défini comme étant le temps nécessaire pour obtenir une augmentation de l'indice consistométrique (exprimée en UM) de 5 unités au dessus de la valeur minimale mesurée pour cet indice.

### I-3. Rhéométrie

Les mesures sont effectuées à 150°C avec un rhéomètre à chambre oscillante, selon la norme DIN 53529 - partie 3 (juin 1983). L'évolution du couple rhéométrique en fonction du temps décrit l'évolution de la rigidification de la composition par suite de la réaction de vulcanisation. Les mesures sont traitées selon la norme DIN 53529 - partie 2 (mars 1983) : Ti est le délai d'induction, c'est-à-dire le temps nécessaire au début de la réaction de vulcanisation ;T_{α} (par exemple T₉₀) est le temps nécessaire pour atteindre une conversion de α%, c'est-à-dire α% (par exemple 90%) de l'écart entre les couples minimum et maximum.

### I-4. Essais de traction

Ces essais de traction permettent de déterminer les contraintes d'élasticité et les propriétés à la rupture. Sauf indication différente, ils sont effectués conformément à la norme française NF T 46-002 de septembre 1988. On mesure en seconde élongation (i.e., après un cycle d'accommodation au taux d'extension prévu pour la mesure elle-même) les modules sécants nominaux (ou contraintes apparentes, en MPa) à 10% d'allongement (notés M10), 100% d'allongement (notés M100) et 300% d'allongement (notés M300). Les contraintes à la rupture (en MPa) et les allongements à la rupture (en %) sont également mesurés. Toutes ces mesures de traction sont effectuées dans les conditions normales de température (23 ± 2°C) et d'hygrométrie (50 ± 5% d'humidité relative), selon la norme française NF T 40-101 (décembre 1979).

### I-5. Dureté Shore A

La dureté Shore A des compositions après cuisson est appréciée conformément à la norme ASTM D 2240-86.

### I-6. Propriétés dynamiques

Les propriétés dynamiques sont mesurées sur un viscoanalyseur (Metravib VA4000), selon la norme ASTM D5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, à une température de 0°C. On effectue un balayage en amplitude de déformation de 0,1% à 50% (cycle aller), puis de 50% à 1% (cycle retour). Les résultats exploités sont le facteur de perte tan(δ); pour le cycle retour, on indique la valeur maximale de tan(δ) observée (notée tan(δ)ₘₐₓ) entre les valeurs à 0,15% et à 50% de déformation (effet Payne).

### I-7. Tests sur pneumatiques

Les pneumatiques sont montés sur un véhicule automobile ("Honda Civic") équipé d'un système de freinage anti-blocage (système ABS) et d'un système antipatinage à l'accélération (système TCS pour *Traction Control System*).

### A) Freinage sur glace:

On mesure la distance nécessaire pour passer de 20 à 5 km/h lors d'un freinage longitudinal brutal (ABS activé) sur une piste recouverte de glace. Une valeur supérieure à celle du témoin, arbitrairement fixée à 100, indique un résultat amélioré c'est-à-dire une distance de freinage plus courte.

### B) Accélération sur glace:

On mesure le temps nécessaire pour passer de 5 à 20 km/h lors d'une accélération à plein régime, sous le contrôle du système TCS activé. Une valeur supérieure à celle du témoin, arbitrairement fixée à 100, indique un résultat amélioré c'est-à-dire une accélération plus rapide.

### II. DESCRIPTION DETAILLEE DE L'INVENTION

La composition de caoutchouc de l'invention est à base d'au moins un élastomère diénique, un système plastifiant, une charge renforçante et des microparticules de sulfate de magnésium, composants qui sont décrits en détail ci-après.

Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### II-1. Elastomère diénique

Par élastomère ou caoutchouc "diénique", on rappelle que doit être entendu un élastomère issu au moins en partie (i.e. un homopolymère ou un copolymère) de monomères diènes (monomères porteurs de deux doubles liaisons carbone-carbone, conjuguées ou non).

Les élastomères diéniques peuvent être classés de manière connue en deux catégories : ceux dits "essentiellement insaturés" et ceux dits "essentiellement saturés". Les caoutchoucs butyl, comme par exemple les copolymères de diènes et d'alpha-oléfines type EPDM, entrent dans la catégorie des élastomères diéniques essentiellement saturés, ayant un taux de motifs d'origine diénique qui est faible ou très faible, toujours inférieur à 15% (% en moles). A contrario, par élastomère diénique essentiellement insaturé, on entend un élastomère diénique issu au moins en partie de monomères diènes conjugués, ayant un taux de motifs ou unités d'origine diénique (diènes conjugués) qui est supérieur à 15% (% en moles). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

On préfère utiliser au moins un élastomère diénique du type fortement insaturé, en particulier un élastomère diénique choisi dans le groupe constitué par les polybutadiènes (BR), les polyisoprènes de synthèse (IR), le caoutchouc naturel (NR), les copolymères de butadiène, les copolymères d'isoprène (autres que IIR) et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans US 6 013 718), des groupes alkoxysilanes (tels que décrits par exemple dans US 5 977 238), des groupes carboxyliques (tels que décrits par exemple dans US 6 815 473 ou US 2006/0089445) ou encore des groupes polyéthers (tels que décrits par exemple dans US 6 503 973). A titre d'autres exemples de tels élastomères fonctionnalisés, on peut citer également des élastomères (tels que SBR, BR, NR ou IR) du type époxydés.

A titre préférentiel conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères de butadiène-isoprène et notamment ceux ayant une teneur en isoprène comprise entre 5% et 90% en poids et une température de transition vitreuse ("Tg" - mesurée selon ASTM D3418-82) de -40°C à -80°C, les copolymères isoprène-styrène et notamment ceux ayant une teneur en styrène comprise entre 5% et 50% en poids et une Tg comprise entre -25°C et -50°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

Selon un mode de réalisation particulièrement préférentiel de l'invention, l'élastomère diénique est choisi dans le groupe constitué par le caoutchouc naturel, les polyisoprènes de synthèse, les polybutadiènes ayant un taux de liaisons cis-1,4 supérieur à 90%, les copolymères de butadiène-styrène et les mélanges de ces élastomères.

Selon un mode de réalisation plus particulier et préférentiel, l'élastomère diénique utilisé est majoritairement, c'est-à-dire pour plus de 50 pce (pour rappel, "pce" signifiant parties en poids pour cent parties d'élastomère), du caoutchouc naturel (NR) ou un polyisoprène de synthèse (IR). Plus préférentiellement, ledit caoutchouc naturel ou polyisoprène de synthèse est alors utilisé en coupage avec un polybutadiène (BR) ayant un taux de liaisons cis-1,4 qui est de préférence supérieur à 90%.

Selon un autre mode de réalisation particulier et préférentiel, l'élastomère diénique utilisé est majoritairement, c'est-à-dire pour plus de 50 pce, un polybutadiène (BR) ayant un taux de liaisons cis-1,4 supérieur à 90%. Plus préférentiellement, ledit polybutadiène est alors utilisé en coupage avec du caoutchouc naturel ou un polyisoprène de synthèse.

Selon un autre mode de réalisation particulier et préférentiel, l'élastomère diénique utilisé est un coupage (mélange) binaire de NR (ou IR) et de BR, ou un coupage ternaire de NR (ou IR), BR et SBR. De préférence, dans le cas de tels coupages, la composition comporte entre 25 et 75 pce de NR (ou IR) et entre 75 et 25 pce de BR, auxquels peut être associé ou non un troisième élastomère (coupage ternaire) à un taux inférieur à 30 pce, notamment inférieur à 20 pce. Ce troisième élastomère est de préférence un élastomère SBR, notamment un SBR solution (dit "SSBR"). Plus préférentiellement encore, dans le cas d'un tel coupage, la composition comporte de 35 à 65 pce de NR (ou IR) et de 65 à 35 pce de BR. Le BR utilisé est de préférence un BR ayant un taux de liaisons cis-1,4 supérieur à 90%, plus préférentiellement supérieur à 95%.

Aux élastomères diéniques des compositions de l'invention pourraient être associés, en quantité minoritaire, des élastomères synthétiques autre que diéniques, voire des polymères autres que des élastomères, par exemple des polymères thermoplastiques.

### II-2. Système plastifiant

La composition de caoutchouc de l'invention a pour autre caractéristique essentielle de comporter au moins 30 pce d'un agent plastifiant liquide (à 23°C) dont la fonction est de ramollir la matrice en diluant l'élastomère et la charge renforçante ; sa Tg est par définition inférieure à -20°C, de préférence inférieure à -40°C.

Toute huile d'extension, qu'elle soit de nature aromatique ou non-aromatique, tout agent plastifiant liquide connu pour ses propriétés plastifiantes vis-à-vis d'élastomères diéniques, est utilisable. A température ambiante (23°C), ces plastifiants ou ces huiles, plus ou moins visqueux, sont des liquides (c'est-à-dire, pour rappel, des substances ayant la capacité de prendre à terme la forme de leur contenant), par opposition notamment à des résines plastifiantes hydrocarbonées qui sont par nature solides à température ambiante.

Conviennent particulièrement les plastifiants liquides choisis dans le groupe constitué par les huiles naphténiques (à basse ou haute viscosité, notamment hydrogénées ou non), les huiles paraffiniques, les huiles MES *(Medium Extracted Solvates),* les huiles TDAE (T*reated Distillate Aromatic Extracts*), les huiles minérales, les huiles végétales, les plastifiants éthers, les plastifiants esters, les plastifiants phosphates, les plastifiants sulfonates et les mélanges de ces composés.

A titre de plastifiants phosphates par exemple, on peut citer ceux qui contiennent entre 12 et 30 atomes de carbone, par exemple le trioctyle phosphate. A titre d'exemples de plastifiants esters, on peut citer notamment les composés choisis dans le groupe constitué par les trimellitates, les pyromellitates, les phtalates, les 1,2-cyclohexane dicarboxylates, les adipates, les azélaates, les sébacates, les triesters de glycérol et les mélanges de ces composés. Parmi les triesters ci-dessus, on peut citer notamment des triesters de glycérol, de préférence constitués majoritairement (pour plus de 50 %, plus préférentiellement pour plus de 80 % en poids) d'un acide gras insaturé en C₁₈, c'est-à-dire choisi dans le groupe constitué par l'acide oléique, l'acide linoléique, l'acide linolénique et les mélanges de ces acides. Plus préférentiellement, qu'il soit d'origine synthétique ou naturelle (cas par exemple d'huiles végétales de tournesol ou de colza), l'acide gras utilisé est constitué pour plus de 50% en poids, plus préférentiellement encore pour plus de 80% en poids d'acide oléique. De tels triesters (trioléates) à fort taux d'acide oléique sont bien connus, ils ont été décrits par exemple dans la demande WO 02/088238, à titre d'agents plastifiants dans des bandes de roulement pour pneumatiques.

Le taux de plastifiant liquide dans la composition de l'invention est de préférence supérieur à 40 pce, plus préférentiellement compris dans un domaine de 50 à 100 pce.

Selon un autre mode de réalisation préférentiel, les compositions de l'invention peuvent comporter aussi, à titre de plastifiant solide (à 23°C), une résine hydrocarbonée présentant une Tg supérieur à +20°C, de préférence supérieure à +30°C, telles que décrites par exemple dans les demandes WO 2005/087859, WO 2006/061064 et WO 2007/017060.

Les résines hydrocarbonées sont des polymères bien connus de l'homme du métier, essentiellement à base de carbone et hydrogène, miscibles donc par nature dans les compositions d'élastomère(s) diénique(s) lorsqu'elles sont qualifiées en outre de "plastifiantes". Elles ont été décrites par exemple dans l'ouvrage intitulé *"*Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. *"Rubber Tires and Mechanical Goods"*). Elles peuvent être aliphatiques, aromatiques ou encore du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Elles sont préférentiellement exclusivement hydrocarbonées, c'est-à-dire qu'elles ne comportent que des atomes de carbone et d'hydrogène.

De préférence, la résine plastifiante hydrocarbonée présente au moins une, plus préférentiellement l'ensemble, des caractéristiques suivantes :
- une Tg supérieure à 20°C (plus préférentiellement entre 40 et 100°C) ;
- une masse moléculaire moyenne en nombre (Mn) comprise entre 400 et 2000 g/mol (plus préférentiellement entre 500 et 1500 g/mol) ;
- un indice de polymolécularité (Ip) inférieur à 3, plus préférentiellement inférieur à 2 (rappel : Ip = Mw/Mn avec Mw masse moléculaire moyenne en poids).

La Tg est mesurée de manière connue par DSC (*Differential Scanning Calorimetry*), selon la norme ASTM D3418 (1999). La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Selon un mode de réalisation particulièrement préférentiel, la résine plastifiante hydrocarbonée est choisie dans le groupe constitué par les résines d'homopolymère ou copolymère de cyclopentadiène (en abrégé CPD), les résines d'homopolymère ou copolymère de dicyclopentadiène (en abrégé DCPD), les résines d'homopolymère ou copolymère terpène, les résines d'homopolymère ou copolymère de coupe C5, les résines d'homopolymère ou copolymère de coupe C9, et les mélanges de ces résines. Parmi les résines de copolymères ci-dessus sont plus préférentiellement utilisées celles choisies dans le groupe constitué par les résines de copolymère (D)CPD/ vinylaromatique, les résines de copolymère (D)CPD/ terpène, les résines de copolymère (D)CPD/ coupe C5, les résines de copolymère (D)CPD/ coupe C9, les résines de copolymère terpène/ vinylaromatique, les résines de copolymère terpène/ phénol, les résines de copolymère coupe C5/ vinylaromatique, les résines de copolymère coupe C9/ vinylaromatique, et les mélanges de ces résines.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha- méthylstyrène, l'ortho-, méta-, para-méthylstyrène, le vinyletoluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe C₉ (ou plus généralement d'une coupe C₈ à C₁₀). De préférence, le composé vinyle-aromatique est du styrène ou un monomère vinylaromatique issu d'une coupe C₉ (ou plus généralement d'une coupe C₈ à C₁₀). De préférence, le composé vinylaromatique est le monomère minoritaire, exprimé en fraction molaire, dans le copolymère considéré.

Le taux de résine hydrocarbonée est préférentiellement compris entre 3 et 60 pce, plus préférentiellement entre 3 et 40 pce, notamment entre 5 et 30 pce.

Le taux d'agent plastifiant total (i.e., plastifiant liquide plus, le cas échéant, résine hydrocarbonée solide) est de préférence compris entre 40 et 100 pce, plus préférentiellement compris dans un domaine de 50 à 80 pce.

### II-3. Charge renforçante

On peut utiliser tout type de charge renforçante connue pour ses capacités à renforcer une composition de caoutchouc utilisable pour la fabrication de pneumatiques, par exemple une charge organique telle que du noir de carbone, ou encore une charge inorganique renforçante telle que de la silice à laquelle est associé de manière connue un agent de couplage.

Une telle charge renforçante consiste typiquement en des nanoparticules dont la taille moyenne (en masse) est inférieure à 500 nm, le plus souvent comprise entre 20 et 200 nm, en particulier et préférentiellement entre 20 et 150 nm.

Comme noirs de carbone conviennent tous les noirs de carbone, notamment les noirs du type HAF, ISAF, SAF conventionnellement utilisés dans les bandes de roulement des pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375. Les noirs de carbone pourraient être par exemple déjà incorporés à l'élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Par "charge inorganique renforçante", doit être entendu ici toute charge inorganique ou minérale, quelles que soient sa couleur et son origine (naturelle ou de synthèse), encore appelée charge "blanche" ou parfois charge "claire" par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber. Comme exemples d'alumines renforçantes, on peut citer les alumines "Baikalox" "A125" ou "CR125" de la société Baïkowski, "APA-100RDX" de Condea, "Aluminoxid C" de Degussa ou "AKP-G015" de Sumitomo Chemicals.

De manière préférentielle, le taux de charge renforçante totale (noir de carbone et/ou charge inorganique renforçante) est compris entre 60 et 120 pce, notamment entre 70 et 100 pce.

Selon un mode de réalisation particulier, la charge renforçante comprend du noir de carbone à titre majoritaire ; dans un tel cas, le noir de carbone est présent à un taux préférentiellement supérieur à 60 pce, associé ou non à une charge inorganique renforçante telle que silice en quantité minoritaire.

Selon un autre mode de réalisation particulier, la charge renforçante comprend une charge inorganique, notamment de la silice, à titre majoritaire ; dans un tel cas, la charge inorganique, notamment silice, est présente à un taux préférentiellement supérieur à 70 pce, associée ou non à du noir de carbone en quantité minoritaire ; le noir de carbone, lorsqu'il est présent, est utilisé de préférence à un taux inférieur à 20 pce, plus préférentiellement inférieur à 10 pce (par exemple entre 0,1 et 10 pce).

Indépendamment de l'aspect premier de l'invention, à savoir la recherche d'une adhérence optimisée sur glace fondante, l'emploi à titre majoritaire d'une charge inorganique renforçante telle que silice est également avantageux du point de vue de l'adhérence sur sol mouillé ou enneigé.

Selon un autre mode de réalisation possible de l'invention, la charge renforçante comprend un coupage de noir de carbone et de charge inorganique renforçante telle que silice en des quantités voisines ; dans un tel cas, le taux de charge inorganique, notamment silice, et le taux de noir de carbone sont de préférence chacun compris entre 25 et 75 pce, plus particulièrement chacun compris entre 30 et 50 pce.

Pour coupler la charge inorganique renforçante à l'élastomère diénique, on utilise de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (I) suivante:

(I) Z - A - Sₓ - A - Z , dans laquelle:

- x est un entier de 2 à 8 (de préférence de 2 à 5) ;
- A est un radical hydrocarboné divalent (de préférence des groupements alkylène en C₁-C₁₈ ou des groupements arylène en C₆-C₁₂, plus particulièrement des alkylènes en C₁-C₁₀, notamment en C₁-C₄, en particulier le propylène) ;
- Z répond à l'une des formules ci-après: 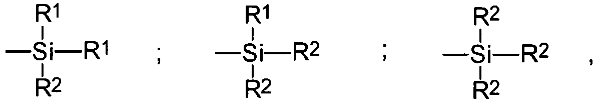 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

A titre d'exemples de silanes polysulfurés, on citera plus particulièrement les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, ou le disulfure de bis-(triéthoxysilylpropyle), en abrégé TESPD. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane (R² = OH dans la formule (I) ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

Dans les compositions de caoutchouc conformes à l'invention, la teneur en agent de couplage est préférentiellement comprise entre 2 et 12 pce, plus préférentiellement entre 3 et 8 pce.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

### II-4. Microparticules de sulfate de magnésium

Les compositions de caoutchouc de l'invention ont pour caractéristique essentielle de comporter entre 5 et 40 pce de microparticules de sulfate de magnésium.

Par microparticules, on entend par définition et de manière générale des particules de taille micrométrique, c'est-à-dire dont la taille moyenne ou la taille médiane (toutes deux exprimées en poids) sont comprises entre 1 µm et 1 mm. De préférence, la taille médiane est comprise entre 2 µm et 800 µm.

En dessous des minima indiqués ci-dessus, l'effet technique visé (à savoir la création d'une microrugosité adaptée) risque d'être insuffisant alors qu'au delà des maxima indiqués, on s'expose à différents inconvénients, en particulier lorsque la composition de caoutchouc est utilisée comme bande de roulement : outre une perte d'esthétique possible (particules trop visibles à la surface de la bande de roulement) et un risque de décohésion, lors du roulage, d'éléments de sculpture de taille relativement importante, on a constaté que la performance d'adhérence sur glace fondante pouvait être dégradée.

Pour toutes ces raisons, on préfère que les microparticules aient une taille médiane comprise entre 2 µm et 500 µm, plus préférentiellement encore comprise dans un domaine de 5 à 200 µm. Ce domaine de taille particulièrement préférentiel semble correspondre à un compromis optimisé entre d'une part la rugosité de surface recherchée et d'autre part un bon contact entre la composition de caoutchouc et la glace.

D'autre part, pour des raisons identiques à celles exposées ci-dessus, le taux de microparticules est de préférence compris entre 5 et 40 pce, plus préférentiellement compris entre 10 et 35 pce.

Pour l'analyse de la granulométrie et le calcul de la taille médiane des microparticules (ou diamètre médian pour des microparticules supposées sensiblement sphériques), différentes méthodes connues sont applicables, par exemple par diffraction laser (voir par exemple norme ISO-8130-13 ou norme JIS K5600-9-3).

On peut aussi utiliser de manière simple et préférentielle une analyse de la granulométrie par un tamisage mécanique ; l'opération consiste a tamiser une quantité définie d'échantillon (par exemple 200 g) sur une table vibrante pendant 30 min avec des diamètres de tamis différents (par exemple, selon une raison de progression égale à 1,26, avec des mailles de 1000, 800, 630, 500, 400, ... 100, 80, 63 µm) ; les refus récoltés sur chaque tamis sont pesés sur une balance de précision ; on en déduit le % de refus pour chaque diamètre de maille par rapport au poids total de produit ; la taille médiane (ou diamètre médian) ou moyenne (ou diamètre moyen) est finalement calculée de manière connue à partir de l'histogramme de la distribution granulométrique.

### II-5. Additifs divers

Les compositions de caoutchouc de l'invention comportent également tout ou partie des additifs usuels habituellement utilisés dans les compositions d'élastomères destinées à la fabrication de bandes de roulement pour pneumatiques, notamment pour pneumatiques hiver, comme par exemple des agents de protection tels que cires anti-ozone, anti-ozonants chimiques, anti-oxydants, des résines renforçantes, des accepteurs (par exemple résine phénolique novolaque) ou des donneurs de méthylène (par exemple HMT ou H3M), un système de réticulation à base soit de soufre, soit de donneurs de soufre et/ou de peroxyde et/ou de bismaléimides, des accélérateurs de vulcanisation, des activateurs de vulcanisation.

Ces compositions peuvent également contenir des activateurs de couplage lorsque qu'un agent de couplage est utilisé, des agents de recouvrement de la charge inorganique ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru ; ces agents sont par exemple des silanes hydrolysables tels que des alkyl-alkoxysilanes, des polyols, des polyéthers, des amines, des polyorganosiloxanes hydroxylés ou hydrolysables.

### II-6. Fabrication des compositions de caoutchouc et des bandes de roulement

Les compositions de caoutchouc de l'invention sont fabriquées dans des mélangeurs appropriés, en utilisant deux phases de préparation successives selon une procédure générale bien connue de l'homme du métier : une première phase de travail ou malaxage thermomécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

Un procédé utilisable pour la fabrication de telles compositions comporte par exemple et de préférence les étapes suivantes :
- incorporer à l'élastomère diénique, dans un mélangeur, plus de 30 pce d'un plastifiant liquide, entre 50 et 150 pce d'une charge renforçante, entre 5 et 40 pce de microparticules de sulfate de magnésium, en malaxant thermomécaniquement le tout, en une ou plusieurs fois, jusqu'à atteindre une température maximale comprise entre 130°C et 200°C ;
- refroidir l'ensemble à une température inférieure à 100°C ;
- incorporer ensuite un système de réticulation ;
- malaxer le tout jusqu'à une température maximale inférieure à 120°C ;
- extruder ou calandrer la composition de caoutchouc ainsi obtenue, notamment sous la forme d'une bande de roulement de pneumatique.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de recouvrement ou de mise en oeuvre complémentaires et autres additifs divers, à l'exception du système de réticulation. Après refroidissement du mélange ainsi obtenu au cours de la première phase non-productive, on incorpore alors le système de réticulation à basse température, généralement dans un mélangeur externe tel qu'un mélangeur à cylindres ; le tout est alors mélangé (phase productive) pendant quelques minutes, par exemple entre 5 et 15 min.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productive et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 3,0 pce, celui de l'accélérateur primaire est de préférence compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont plus préférentiellement choisis dans le groupe constitué par disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable directement comme bande de roulement de pneumatique hiver.

La vulcanisation (ou cuisson) est conduite de manière connue à une température généralement comprise entre 130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

Les compositions de caoutchouc selon l'invention peuvent constituer la totalité ou une partie seulement de la bande de roulement conforme à l'invention, dans le cas d'une bande de roulement de type composite formée de plusieurs compositions de caoutchouc de formulations différentes.

L'invention concerne les compositions de caoutchouc et bandes de roulement précédemment décrites tant à l'état cru (i.e., avant cuisson) qu'à l'état cuit (i.e., après réticulation ou vulcanisation).

### III. EXEMPLES DE REALISATION DE L'INVENTION

### III-1. Préparation des compositions de caoutchouc et bandes de roulement

On procède pour les essais qui suivent de la manière suivante: on introduit dans un mélangeur interne, dont la température initiale de cuve est d'environ 60°C, successivement la charge renforçante (par exemple une charge inorganique renforçante telle que silice et son agent de couplage associé), le plastifiant liquide, les microparticules de sulfate de magnésium, l'élastomère diénique (ou coupage d'élastomères diéniques) ainsi que les divers autres ingrédients à l'exception du système de vulcanisation ; le mélangeur est ainsi rempli à environ 70% (% en volume). On conduit alors un travail thermomécanique (phase non-productive) en une étape, qui dure au total environ 3 à 4 minutes, jusqu'à atteindre une température maximale de "tombée" de 165°C. On récupère le mélange ainsi obtenu, on le refroidit puis on incorpore du soufre et un accélérateur type sulfénamide sur un mélangeur externe (homo-finisseur) à 30°C, en mélangeant le tout (phase productive) pendant un temps approprié (par exemple entre 5 et 12 min).

Les compositions ainsi obtenues sont ensuite calandrées soit sous la forme de plaques (épaisseur de 2 à 3 mm) ou feuilles fines de caoutchouc pour la mesure de leurs propriétés physiques ou mécaniques, soit extrudées sous la forme de bandes de roulement de pneumatiques hiver pour véhicule tourisme.

### III-2. Tests de caoutchouterie

Dans cet essai, on compare deux compositions (notées C-1 et C-2) à base d'élastomères diéniques (coupage NR et BR à taux de liaisons cis-1,4 supérieur à 95%), renforcées par un coupage de silice et de noir de carbone auxquels est associée ou non une fraction (20 pce) de microparticules de sulfate de magnésium.

Les tableaux 1 et 2 donnent la formulation des deux compositions (tableau 1 - taux des différents produits exprimés en pce), leurs propriétés avant et après cuisson (30 min à 150°C) ; le système de vulcanisation est constitué par soufre et sulfénamide.

Le taux de plastifiant liquide a été ajusté dans la composition de l'invention C-2 ceci afin de maintenir la rigidité au même niveau que celui de la composition témoin C-1 (dureté Shore A égale à environ 55 dans les deux cas) : de manière connue, une rigidité identique est la condition nécessaire à une comparaison rigoureuse des performances de roulage sur glace (paragraphe III-3).

Tout d'abord, l'examen des différents résultats du tableau 2 ne révèle aucune dégradation notable des propriétés de caoutchouterie pour la composition de l'invention (C-2) malgré la présence d'un taux élevé de microparticules de sulfate de magnésium, ce qui constitue déjà un résultat inattendu pour l'homme du métier :
- la processabilité à l'état cru (plasticité Mooney) reste comparable ;
- les propriétés rhéométriques (cuisson) ne sont pas modifiées de manière sensible, la sécurité au grillage (T5) étant même augmentée de 2 min ;
- après cuisson, dureté Shore et modules en extension restent constants, ce qui est favorable au comportement mécanique de la bande de roulement, donc au comportement routier du pneumatique ;
- la diminution de contrainte à la rupture est très faible ;
- enfin, l'hystérèse n'est pas dégradée, et même améliorée (valeur de tan(δ)ₘₐₓ réduite de 20% environ).

Ce n'est en fait qu'au cours de tests de roulage réels conduits sur pneumatiques que se révèle le résultat inattendu apporté par l'invention, comme en atteste clairement les essais qui suivent.

### III-3. Essais en pneumatiques

Les compositions C-1 et C-2 précédemment testées sont ensuite utilisées comme bandes de roulement de pneumatiques tourisme hiver à carcasse radiale, notés respectivement P-1 (pneus témoins) et P-2 (pneus conformes à l'invention), de dimensions 205/65 R15 conventionnellement fabriqués et en tous points identiques, hormis les compositions de caoutchouc constitutives de leur bande de roulement.

Tous les pneumatiques sont montés à l'avant et à l'arrière d'un véhicule automobile, sous pression de gonflage nominale, et on leur fait d'abord subir un roulage sur circuit (d'environ 2000 km), sur un sol sec, pour rodage et début d'usure.

Puis les pneumatiques ainsi rodés sont soumis aux test d'adhérence sur glace tels que décrits au paragraphe I-7 qui précède, selon différentes conditions de température.

Les résultats des tests de roulage sont rapportés dans le tableau 3, en unités relatives, la base 100 étant retenue pour le pneumatique témoin P-1 (pour rappel, une valeur supérieure à 100 indique une performance améliorée).

On constate que le freinage et l'accélération sur glace fondante (-3°C) sont tous deux notablement améliorés pour les pneumatiques conformes à l'invention (P-2) alors qu'aucun effet n'est visible pour une température inférieure à -5°C (freinage non amélioré de manière sensible à une température de -8°C). C'est bien la démonstration que l'adhérence sur glace fondante est une problématique spécifique qui nécessite des solutions bien spécifiques.

Deux autres compositions ont été préparées comme indiquées précédemment, à base d'élastomères diéniques renforcés par un coupage de silice et de noir de carbone (40 pce de chaque) mais comportant en outre 10 pce d'une résine hydrocarbonée (résine polylimonène) à titre de plastifiant solide, auxquels était associée ou non une fraction (20 pce) de microparticules de sulfate de magnésium.

Cette résine hydrocarbonée possède toutes les caractéristiques préférentielles suivantes :
- une Tg comprise entre 40 et 100°C ;
- une masse moléculaire moyenne Mn entre 500 et 1 500 g/mol ;
- un indice Ip inférieur à 2.

Le tableau 4 donne la formulation des deux compositions (taux des différents produits exprimés en pce). La composition témoin est notée C-3, la composition conforme à l'invention notée C-4 est celle comportant les microparticules de sulfate de magnésium. Le taux de plastifiant liquide a été ajusté dans la composition C-4 afin de maintenir la rigidité au même niveau que celui de la composition témoin C-3 (dureté Shore A égale à environ 52 dans les deux cas).

Ces deux compositions C-3 et C-4 ont été ensuite utilisées comme bandes de roulement de pneumatiques tourisme hiver à carcasse radiale, notés respectivement P-3 (pneus témoins) et P-4 (pneus conformes à l'invention), de dimensions 205/55 R16 conventionnellement fabriqués et en tous points identiques, hormis les compositions de caoutchouc constitutives de leur bande de roulement. Ces pneumatiques ont été testés dans les mêmes conditions que précédemment pour les pneumatiques P-1 et P-2.

Les résultats des tests de roulage sont rapportés dans le tableau 5, en unités relatives, la base 100 étant retenue pour le pneumatique témoin P-3 (pour rappel, une valeur supérieure à 100 indique une performance améliorée).

On note dans ce tableau 5 que l'amélioration des performances d'adhérence (freinage et accélération) des pneumatiques de l'invention (pneus P-4) est encore très nettement augmentée comparativement aux essais précédent (pneus P-2), en présence de la résine hydrocarbonée.

D'autre part, des clichés de microscopie optique (sur les figures annexées, 1 cm représente environ 1,25 mm) ont été réalisés à la surface de la bande roulement de pneumatiques témoins P-3 (cliché de la Fig. 1) et à la surface de la bande de roulement de pneumatiques conformes à l'invention P-4 (cliché de la Fig. 2), après le rodage de 2000 km sur sol sec et donc un début d'usure. La figure 2 (pneu de l'invention), comparée à la figure 1 (pneu témoin), illustre bien d'elle-même la capacité de la composition de l'invention à générer une microrugosité de surface efficace et significative, grâce à ses microparticules hydrosolubles de sulfate de magnésium.

### III-4. Tests de friction

Des essais complémentaires ont été réalisés dans lesquels on a comparé aux compositions précédentes C-3 et C-4, une autre composition notée C-5 de même formulation que la composition C-4 conforme à l'invention mais se distinguant de cette dernière par la nature des microparticules hydrosolubles utilisées :
- composition C-3 : composition témoin (sans microparticules) ;
- composition C-4 : composition conforme à l'invention, avec 20 pce de microparticules de sulfate de magnésium (taille médiane d'environ 100 µm) ;
- composition C-5 : composition non conforme à l'invention comportant 20 pce de microparticules de carbonate de magnésium dont la taille médiane est d'environ 40 µm, disponibles auprès de la société Kanto Kagaku (réf. 25008-01).

Toutes les tailles médianes indiquées ci-dessus ont été mesurées par tamisage mécanique, comme indiqué au paragraphe II-4 précédent. Seule la composition C-4 comportant des microparticules de sulfate de magnésium était donc conforme à l'invention.

Ces trois compositions ont été soumises à un test laboratoire consistant à mesurer leur coefficient de friction sur glace. Le principe repose sur un patin de composition de caoutchouc glissant à une vitesse donnée (par exemple égale à 5 km/h) sur une piste de glace avec une charge imposée (par exemple égale à 3 kg/cm²). Les forces générées dans le sens de l'avancement (Fx) du patin et perpendiculaire à l'avancement (Fz) sont mesurées. Le rapport Fx/Fz détermine le coefficient de friction de l'éprouvette sur la glace. La température pendant la mesure est fixée a -2 C.

Ce test dont le principe est bien connu de l'homme du métier (voir par exemple demandes de brevet EP 1052270 et EP 1505112) permet d'évaluer dans des conditions représentatives l'adhérence sur glace fondante qui serait obtenue après un essai de roulage sur véhicule équipé de pneumatiques dont la bande de roulement est constituée des mêmes compositions de caoutchouc.

Les résultats sont exprimés dans le tableau 6. Une valeur supérieure à celle du témoin (composition C-3), arbitrairement fixée à 100, indique un résultat amélioré c'est-à-dire une aptitude à une distance de freinage plus courte. On constate dans ce tableau 6 que seule la composition C-4 conforme à l'invention présente une augmentation très nette (proche de 10%) du coefficient de friction sur glace, par rapport à la composition témoin C-3 ; l'autre composition C-5 non conforme à l'invention ne modifie pas le coefficient de friction par rapport à la composition témoin C-3.

En conclusion, les compositions conformes à l'invention comportant des microparticules de sulfate de magnésium offrent aux pneumatiques et à leurs bandes de roulement une performance combinée d'adhérence et accélération sur glace fondante qui est notablement améliorée.

**Tableau 1**

| Composition N°: | C-1 | C-2 |
|---|---|---|
| BR (1) | 60 | 60 |
| NR (2) | 40 | 40 |
| silice (3) | 80 | 80 |
| agent de couplage (4) | 5 | 5 |
| microparticules (5) | - | 20 |
| noir de carbone (6) | 5 | 5 |
| huile non aromatique (7) | 65 | 60 |
| DPG (8) | 1.5 | 1.5 |
| ZnO | 1.2 | 1.2 |
| acide stéarique | 1 | 1 |
| cire anti-ozone | 1.5 | 1.5 |
| antioxydant (9) | 2 | 2 |
| soufre | 2 | 2 |
| accélérateur (10) | 1.7 | 1.7 |

| | | |
|---|---|---|
| (1) BR avec 4,3% de 1-2 ; 2,7% de trans ; 97% de cis 1-4 (Tg = -104°C) ; (2) Caoutchouc naturel (peptisé) ; (3) silice "Zeosil 1115MP" de la société Rhodia, type "HDS" (BET et CTAB : environ 120 m²/g); (4) agent de couplage TESPT ("Si69" de la société Degussa) ; (5) sulfate de magnésium (société Aldrich ; taille médiane des particules : environ 100 µm) ; (6) grade ASTM N234 (société Cabot) ; (7) huile MES ("Catenex SNR" de Shell) ; (8) diphénylguanidine (Perkacit DPG de la société Flexsys) ; (9) N-1,3-diméthylbutyl-N-phénylparaphénylènediamine (Santoflex 6-PPD de la société Flexsys); (10) N-dicyclohexyl-2-benzothiazol-sulfénamide ("Santocure CBS" de la société Flexsys). | | |

**Tableau 2**

| Composition N°: | C-1 | C-2 |
|---|---|---|
| *Propriétés avant cuisson:* | | |
| Mooney (UM) | 54 | 60 |
| T5 (min) | 13 | 15 |
| Ti (min) | 2.1 | 1.8 |
| T₉₀ (min) | 17 | 18 |
| T₉₀ - Ti (min) | 13.7 | 13.2 |
| | | |

| *Propriétés après cuisson:* | | |
|---|---|---|
| Shore A | 55 | 55 |
| M10 (MPa) | 3.4 | 3.5 |
| M100 (MPa) | 1.1 | 1.1 |
| M300 (MPa) | 1.0 | 1.0 |
| contrainte à la rupture (MPa) | 13.9 | 12.6 |
| allongement à la rupture (%) | 540 | 560 |
| tan(δ)ₘₐₓ (0°C) | 0.280 | 0.220 |

**Tableau 3**

| Pneumatique°: | P-1 | P-2 |
|---|---|---|
| Freinage sur glace (-3°C) | 100 | 114 |
| Freinage sur glace (-8°C) | 100 | 102 |
| Accélération sur glace (-4°C) | 100 | 105 |

**Tableau 4**

| Composition N°: | C-3 | C-4 |
|---|---|---|
| BR (1) | 60 | 60 |
| NR (2) | 40 | 40 |
| silice (3) | 40 | 40 |
| agent de couplage (4) | 3 | 3 |
| microparticules (5) | - | 20 |
| noir de carbone (6) | 40 | 40 |
| huile non aromatique (7) | 35 | 45 |
| résine hydrocarbonée (11) | 10 | 10 |
| DPG (8) | 0.8 | 0.8 |
| ZnO | 1.0 | 1.0 |
| acide stéarique | 1 | 1 |
| cire anti-ozone | 1.5 | 1.5 |
| antioxydant (9) | 2 | 2 |
| soufre | 2 | 2 |
| accélérateur (10) | 1.7 | 1.7 |

| | | |
|---|---|---|
| (1) à (10): idem tableau 1 ; (11) résine polylimonène ("Dercolyte L120" de la société DRT ; Tg = 72°C, Mn = 625 g/mol ; Ip = 1,6). | | |

**Tableau 5**

| Pneumatique°: | P-3 | P-4 |
|---|---|---|
| Freinage sur glace (-1°C) | 100 | 122 |
| Freinage sur glace (-6°C) | 100 | 109 |
| Accélération sur glace (-3°C) | 100 | 109 |

**Tableau 6**

| Composition de caoutchouc °: | C-3 | C-4 | C-5 |
|---|---|---|---|
| Friction sur glace (-2°C) | 100 | 109 | 99 |

## Revendications

1. Composition de caoutchouc utilisable comme bande de roulement d'un pneumatique hiver, comprenant au moins un élastomère diénique, plus de 30 pce d'un plastifiant liquide à 23°C, entre 50 et 150 pce d'une charge renforçante, **caractérisée en ce qu'**elle comporte entre 5 et 40 pce de microparticules de sulfate de magnésium dont la dont la taille médiane en poids est mesurée par diffraction laser selon la norme ISO-8130-13 est comprise entre 1 µm et 1 mm.

2. Composition selon la revendication 1, dans laquelle les microparticules ont une taille médiane (en poids) comprise entre 2 et 500 µm.

3. Composition selon la revendication 2, dans laquelle les microparticules ont une taille médiane comprise entre 5 et 200 µm.

4. Composition selon l'une quelconque des revendications 1 à 3, dans laquelle l'élastomère diénique est choisi dans le groupe constitué par le caoutchouc naturel, les polyisoprènes de synthèse, les polybutadiènes, les copolymères de butadiène, les copolymères d'isoprène et les mélanges de ces élastomères.

5. Composition selon la revendication 4, comportant plus de 50 pce de caoutchouc naturel ou de polyisoprène de synthèse.

6. Composition selon la revendication 4, comportant plus de 50 pce d'un polybutadiène ayant un taux de liaisons cis-1,4 supérieur à 90%.

7. Composition selon l'une quelconque des revendications 1 à 6, dans laquelle la charge renforçante comprend à titre majoritaire du noir de carbone, le taux de noir de carbone étant de préférence supérieur à 60 pce.

8. Composition selon l'une quelconque des revendications 1 à 6, dans laquelle la charge renforçante comprend à titre majoritaire une charge inorganique renforçante, le taux de charge inorganique renforçante étant de préférence supérieur à 70 pce.

9. Composition selon l'une quelconque des revendications 1 à 8, dans laquelle le taux de charge renforçante totale est compris entre 60 et 120, de préférence entre 70 et 100 pce.

10. Composition selon l'une quelconque des revendications 1 à 9, dans laquelle le plastifiant liquide est choisi dans le groupe constitué par constitué par les huiles naphténiques, les huiles paraffiniques, les huiles MES (Medium Extracted Solvates), les huiles TDAE (Treated Distillate Aromatic Extracts), les huiles minérales, les huiles végétales, les plastifiants éthers, les plastifiants esters, les plastifiants phosphates, les plastifiants sulfonates et les mélanges de ces composés.

11. Composition selon l'une quelconque des revendications 1 à 10, dans laquelle le taux de plastifiant liquide est supérieur à 40 pce, de préférence compris dans un domaine de 50 à 100 pce.

12. Composition selon l'une quelconque des revendications 1 à 11, comportant une résine hydrocarbonée présentant une Tg, mesurée par DSC (Differential Scanning Calorimetry), selon la norme ASTM D3418 (1999), supérieure à 20°C.

13. Composition selon la revendication 12, dans laquelle la résine hydrocarbonée est choisie dans le groupe constitué par les résines d'homopolymère ou copolymère de cyclopentadiène, les résines d'homopolymère ou copolymère de dicyclopentadiène, les résines d'homopolymère ou copolymère terpène, les résines d'homopolymère ou copolymère de coupe C5, les résines d'homopolymère ou copolymère de coupe C9, et les mélanges de ces résines.

14. Composition selon les revendications 12 ou 13, dans laquelle le taux de résine hydrocarbonée est compris entre 3 et 60 pce.

15. Pneumatique hiver comportant une bande de roulement comportant une composition conforme à l'une quelconque des revendications 1 à 14.

## Patentansprüche

1. Als Lauffläche eines Winterreifens verwendbare Kautschukzusammensetzung, umfassend mindestens ein Dienelastomer, mehr als 30 phe eines bei 23°C flüssigen Weichmachers und zwischen 50 und 150 phe eines verstärkenden Füllstoffs, **dadurch gekennzeichnet, dass** sie zwischen 5 und 40 phe Magnesiumsulfat-Mikroteilchen mit einer durch Laserbeugung gemäß der Norm ISO-8130-13 gemessenen wird gewichtsmittleren Teilchengröße zwischen 1 µm und 1 mm umfasst.

2. Zusammensetzung nach Anspruch 1, wobei die Mikroteilchen eine (gewichts)mittlere Größe zwischen 2 und 500 µm aufweisen.

3. Zusammensetzung nach Anspruch 2, wobei die Mikroteilchen eine mittlere Größe zwischen 5 und 200 µm aufweisen.

4. Zusammensetzung nach einem der Ansprüche 1 bis 3, wobei das Dienelastomer aus der Gruppe bestehend aus Naturkautschuk, synthetischen Polyisoprenen, Polybutadienen, Butadien-Copolymeren, Isopren-Copolymeren und Mischungen dieser Elastomere ausgewählt ist.

5. Zusammensetzung nach Anspruch 4, die mehr als 50 phe Naturkautschuk oder synthetisches Polyisopren umfasst.

6. Zusammensetzung nach Anspruch 4, die mehr als 50 phe eines Polybutadiens mit einem Gehalt an cis-1,4-Bindungen von mehr als 90% umfasst.

7. Zusammensetzung nach einem der Ansprüche 1 bis 6, wobei der verstärkende Füllstoff mehrheitlich Ruß umfasst, wobei der Rußgehalt vorzugsweise mehr als 60 phe beträgt.

8. Zusammensetzung nach einem der Ansprüche 1 bis 6, wobei der verstärkende Füllstoff mehrheitlich einen verstärkenden anorganischen Füllstoff umfasst, wobei der Gehalt an verstärkendem anorganischem Füllstoff vorzugsweise über 70 phe beträgt.

9. Zusammensetzung nach einem der Ansprüche 1 bis 8, wobei der Gesamtgehalt an verstärkendem Füllstoff zwischen 60 und 120 phe, vorzugsweise zwischen 70 und 100 phe, liegt.

10. Zusammensetzung nach einem der Ansprüche 1 bis 9, wobei der flüssige Weichmacher aus der Gruppe bestehend aus bestehend aus naphthenischen Ölen, Paraffinölen, MES-Ölen (MES = Medium Extracted Solvates), TDAE-Ölen (TDAE = Treated Distillate Aromatic Extracts), Mineralölen, Pflanzenölen, Ether-Weichmachern, Ester-Weichmachern, Phosphat-Weichmachern, Sulfonat-Weichmachern und Mischungen dieser Verbindungen ausgewählt ist.

11. Zusammensetzung nach einem der Ansprüche 1 bis 10, wobei der Gehalt an flüssigem Weichmacher mehr als 40 phe beträgt und vorzugsweise in einem Bereich von 50 bis 100 phe liegt.

12. Zusammensetzung nach einem der Ansprüche 1 bis 11, umfassend ein Kohlenwasserstoffharz mit einer durch DSC (Differential Scanning Calorimetry) gemäß ASTM-Norm D3418 (1999) gemessenen Tg von mehr als 20 °C.

13. Zusammensetzung nach Anspruch 12, wobei das Kohlenwasserstoffharz aus der Gruppe bestehend aus Homopolymer- oder Copolymerharzen von Cyclopentadien, Homopolymer- oder Copolymerharzen von Dicyclopentadien, Terpen-Homopolymer- oder - Copolymerharzen, C5-Schnitt-Homopolymer- oder - Copolymerharzen, C9-Schnitt-Homopolymer- oder - Copolymerharzen und Mischungen dieser Harze ausgewählt ist.

14. Zusammensetzung nach Anspruch 12 oder 13, wobei der Gehalt an Kohlenwasserstoffharz zwischen 3 und 60 phe liegt.

15. Winterreifen mit einer Lauffläche, die eine Zusammensetzung gemäß einem der Ansprüche 1 bis 14 umfasst.

## Claims

1. Rubber composition usable as tread for a winter tyre and which comprises at least a diene elastomer, more than 30 phr of a plasticizer which is liquid at 23°C, and between 50 and 150 phr of a reinforcing filler, **characterized in that** it comprises between 5 and 40 phr of magnesium sulphate microparticles, the median size by weight of which is measured by laser diffraction according to Standard ISO-8130-13 is between 1 µm and 1 mm.

2. Composition according to Claim 1, in which the microparticles have a median size (by weight) of between 2 and 500 µm.

3. Composition according to Claim 2, in which the microparticles have a median size of between 5 and 200 µm.

4. Composition according to any one of Claims 1 to 3, in which the diene elastomer is chosen from the group consisting of natural rubber, synthetic polyisoprenes, polybutadienes, butadiene copolymers, isoprene copolymers and the mixtures of these elastomers.

5. Composition according to Claim 4, comprising more than 50 phr of natural rubber or of synthetic polyisoprene.

6. Composition according to Claim 4, comprising more than 50 phr of a polybutadiene having a content of cis-1,4 bonds of greater than 90%.

7. Composition according to any one of Claims 1 to 6, in which the reinforcing filler predominantly comprises carbon black, the content of carbon black preferably being greater than 60 phr.

8. Composition according to any one of Claims 1 to 6, in which the reinforcing filler predominantly comprises a reinforcing inorganic filler, the content of reinforcing inorganic filler preferably being greater than 70 phr.

9. Composition according to any one of Claims 1 to 8, in which the content of total reinforcing filler is between 60 and 120, preferably between 70 and 100 phr.

10. Composition according to any one of Claims 1 to 9, in which the liquid plasticizer is chosen from the group consisting of consisting of naphthenic oils, paraffinic oils, MES (Medium Extracted Solvates) oils, TDAE (Treated Distillate Aromatic Extracts) oils, mineral oils, vegetable oils, ether plasticizers, ester plasticizers, phosphate plasticizers, sulphonate plasticizers and the mixtures of these compounds.

11. Composition according to any one of Claims 1 to 10, in which the content of liquid plasticizer is greater than 40 phr, preferably included within a range of from 50 to 100 phr.

12. Composition according to any one of Claims 1 to 11, comprising a hydrocarbon resin exhibiting a Tg, measured by DSC (Differential Scanning Calorimetry), according to ASTM Standard D3418 (1999), of greater than 20°C.

13. Composition according to Claim 12, in which the hydrocarbon resin is chosen from the group consisting of cyclopentadiene homopolymer or copolymer resins, dicyclopentadiene homopolymer or copolymer resins, terpene homopolymer or copolymer resins, C₅ fraction homopolymer or copolymer resins, C₉ fraction homopolymer or copolymer resins and the mixtures of these resins.

14. Composition according to Claims 12 or 13, in which the content of hydrocarbon resin is between 3 and 60 phr.

15. Winter tyre comprising a tread comprising a composition in accordance with any one of Claims 1 to 14.
